# EUROPEAN PATENT APPLICATION

(11) **EP 4 765 977 A1**
(43) Date of publication of application: **24.06.2026**
(21) Application number: 23948849.7
(22) Date of filing: 16.08.2023
(51) Int. Cl.: H04W 72/0453

(54) **DATA TRANSMISSION METHOD AND APPARATUS**

(71) Applicant: HUAWEI TECHNOLOGIES CO., LTD., Shenzhen 518129 (CN)
(72) Inventor: LIU, Zhe, Shenzhen, Guangdong 518129 (CN); YANG, Lu, Shenzhen, Guangdong 518129 (CN); PENG, Chenghui, Shenzhen, Guangdong 518129 (CN); WANG, Jun, Shenzhen, Guangdong 518129 (CN); WANG, Fei, Shenzhen, Guangdong 518129 (CN); HUANG, Huanhuan, Shenzhen, Guangdong 518129 (CN)
(74) Representative: Gill Jennings & Every LLP
(86) International application number: PCT/CN2023/113322
(87) International publication number: WO 2025/035420

(57) **Abstract**

This application provides a data transmission method and an apparatus, so that data that needs to be sent to a first compute node can be directly sent to the first compute node based on a cell corresponding to the first compute node. The method includes: receiving configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; determining a first compute node, where the first compute node is configured to execute a computing execution function; and sending, based on the configuration information via at least one cell in a first cell group in the plurality of cell groups, data on at least one logical channel included in a first logical channel group to the first compute node in the plurality of compute nodes, where the first cell group, the first compute node, and the first logical channel group correspond to each other, and the plurality of logical channel groups include the first logical channel group.

## Description

### TECHNICAL FIELD

This application relates to the communication field, and more specifically, to a data transmission method and an apparatus.

### BACKGROUND

In a new computational power (computational power for short) network architecture, network elements not only have control and forwarding capabilities, but also have a capability of computing and processing data, for example, artificial intelligence (artificial intelligence, AI) computing, perception computing, and scientific computing. In addition to the network elements, a compute node is further deployed in the network. Computational power generated in this computing-network integration mode is referred to as network native computational power, where the compute node has a computing execution function. At the beginning of network design, computational power is considered as a basic element of a network. The computational power is spread throughout a network, widely distributed in a cloud, an edge, a device, and an intermediate network element, and is integrated into the network. A computational power service, a connection service, and a service in which computational power and connection are comprehensively considered are all used as basic services that the network can provide externally. The network native computational power can promote the development and deployment of network native intelligence, better support ubiquitous base stations and terminal devices with perception, communication, and computing capabilities, implement large-scale intelligent distributed collaboration services, maximize the utility of communication and computational power on the network, adapt to data distribution, and protect data privacy. In the new network architecture, control planes of the network element and the compute node are streamlined, which can compensate for a shortage in streamlining management planes of the network element and the compute node, and can respond to movement of a terminal device and a network change in a timely manner. The network native computational power can promote the generation and development of future intelligent applications, such as immersive cloud virtual reality (virtual reality, XR), holographic communication, sensory interconnection, smart interaction, communication perception, and digital twin.

In a carrier aggregation (carrier aggregation, CA) scenario, a primary cell (primary cell, PCell) and a secondary cell (secondary cell, SCell) share a medium access control (medium access control, MAC) entity, a radio link control (radio link control, RLC) entity, a packet data convergence protocol (packet data convergence protocol, PDCP) entity, and a service data adaptation protocol (service data adaptation protocol, SDAP) entity, and data is not split and identified at a MAC layer, an RLC layer, a PDCP layer, and the like. A terminal device sends an uplink data packet to the PCell/SCell through a physical uplink shared channel (physical uplink shared channel, PUSCH) at a physical layer (physical layer, PHY), the PCell performs convergence for PUSCHs of the PCell and the SCell at the MAC layer, and sends the uplink data packet of the terminal device to a user plane function (user plane function, UPF) through an RLC, a PDCP, and an SDAP. In a dual connectivity (dual connectivity, DC) scenario, both a master base station and a secondary base station have complete protocol stacks. When data splitting is performed by the master base station, the secondary base station has a corresponding RLC, MAC, and PHY. An uplink data packet that needs to be sent by a terminal device via the secondary base station passes through an RLC layer of the secondary base station, undergoes convergence at a PDCP layer of the master base station, and finally is sent to a UPF through an SDAP of the master base station. In the foregoing two scenarios, the uplink data packet that needs to be sent to the compute node needs to be forwarded by the UPF to the compute node. Consequently, a transmission delay of the uplink data packet is long, communication efficiency is low, and transmission overheads are high.

### SUMMARY

This application provides a data transmission method and an apparatus, so that data that needs to be sent to a first compute node can be directly sent to the first compute node based on a cell corresponding to the first compute node, and does not need to be forwarded to the first compute node via a UPF, thereby reducing a transmission delay, improving communication efficiency, and reducing transmission overheads.

According to a first aspect, a data transmission method is provided. The method may be performed by a terminal device or a chip or a chip system on a terminal device side. The method includes: A terminal device receives configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; and determines a first compute node, where the first compute node is configured to execute a computing execution function; and the terminal device sends, based on the configuration information via at least one cell in a first cell group, data on at least one logical channel included in a first logical channel group to the first compute node, where the first cell group, the first compute node, and the first logical channel group correspond to each other, the plurality of compute nodes include the first compute node, the plurality of logical channel groups include the first logical channel group, and the plurality of cell groups include the first cell group.

Based on the foregoing technical solution, the configuration information received by the terminal device may be used to determine the one-to-one correspondences between the plurality of compute nodes, the plurality of cell groups, and the plurality of logical channel groups. The data that needs to be sent to the first compute node may be cached on the at least one logical channel included in the first logical channel group corresponding to the first compute node, and the data on the at least one logical channel included in the first logical channel group is sent to the first compute node by using an uplink grant resource of the at least one cell in the first cell group corresponding to the first compute node. According to the technical solution provided in embodiments of this application, identification and packet assembly can be performed, at a MAC layer, on the data that needs to be sent to the first compute node, so that the data that needs to be sent to the first compute node can be directly sent to the first compute node based on a cell corresponding to the first compute node, and does not need to be forwarded to the first compute node via a UPF, thereby reducing a transmission delay, improving communication efficiency, and reducing transmission overheads. For example, the first compute node corresponds to a PCell, the first cell group includes the PCell, and the data that needs to be sent to the first compute node may be directly sent to the first compute node based on the PCell. For another example, the first compute node corresponds to a SCell, the first cell group includes the SCell, and the data that needs to be sent to the first compute node may be directly sent to the first compute node based on the SCell.

With reference to the first aspect, in some implementations of the first aspect, the method further includes: The terminal device caches, based on the configuration information, the data into the at least one logical channel included in the first logical channel group corresponding to the first compute node. Based on this implementation, the terminal device may identify, at the MAC layer based on the one-to-one correspondence between the plurality of compute nodes and the plurality of logical channel groups, the data that needs to be sent to the first compute node in the plurality of compute nodes, and cache the data at the MAC layer.

With reference to the first aspect, in some implementations of the first aspect, the method further includes: The terminal device receives uplink grant information, where the uplink grant information is used to determine an uplink grant resource of the at least one cell; and the sending, based on the configuration information via the at least one cell in the first cell group, the data on the at least one logical channel included in the first logical channel group to the first compute node includes: sending, based on the configuration information by using the uplink grant resource of the at least one cell in the first cell group, the data on the at least one logical channel included in the first logical channel group to the first compute node. Based on this implementation, the uplink grant resource obtained by the terminal device is the uplink grant resource of the at least one cell in the first cell group corresponding to the first compute node. The terminal device may directly send, by using the uplink grant resource, the data that needs to be sent to the first compute node to the first compute node, and does not need to send the data to the UPF by using an uplink grant resource corresponding to another cell group other than the first cell group, so that the data does not need to be forwarded to the first compute node via the UPF.

With reference to the first aspect, in some implementations of the first aspect, that the terminal device sends, based on the configuration information via the at least one cell in the first cell group, the data on the at least one logical channel included in the first logical channel group to the first compute node includes: The terminal device performs, based on the configuration information, packet assembly on the data on the at least one logical channel included in the first logical channel group, to generate a medium access control protocol data unit MAC PDU; and the terminal device sends the MAC PDU to the first compute node by using the uplink grant resource of the at least one cell in the first cell group.

With reference to the first aspect, in some implementations of the first aspect, the MAC PDU includes at least one MAC service data unit SDU on the at least one logical channel included in the first logical channel group; and each logical channel includes one or more MAC SDUs.

With reference to the first aspect, in some implementations of the first aspect, the at least one logical channel is determined based on a priority of data on a logical channel included in the first logical channel group.

With reference to the first aspect, in some implementations of the first aspect, the at least one cell is determined from the first cell group based on scheduling information from a network device.

According to a second aspect, a data transmission method is provided. The method may be performed by a network device or a chip or a chip system on a network device side. The method includes: A network device determines configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; and the network device sends the configuration information to a terminal device.

The method provided in the second aspect is a network device side method corresponding to the first aspect. For beneficial effects thereof, directly refer to those of the first aspect.

According to a third aspect, a communication apparatus is provided. The communication apparatus may be used in the terminal device according to the first aspect. The apparatus includes: a receiving unit, configured to receive configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; a processing unit, configured to determine a first compute node, where the first compute node is configured to execute a computing execution function; and a sending unit, configured to send, based on the configuration information via at least one cell in a first cell group, data on at least one logical channel included in a first logical channel group to the first compute node, where the first cell group, the first compute node, and the first logical channel group correspond to each other, the plurality of compute nodes include the first compute node, the plurality of logical channel groups include the first logical channel group, and the plurality of cell groups include the first cell group.

With reference to the third aspect, in some implementations of the third aspect, the processing unit is further configured to cache, based on the configuration information, the data into the at least one logical channel included in the first logical channel group corresponding to the first compute node.

With reference to the third aspect, in some implementations of the third aspect, the receiving unit is further configured to receive uplink grant information, where the uplink grant information is used to determine an uplink grant resource of the at least one cell; and the processing unit is specifically configured to send, based on the configuration information by using the uplink grant resource of the at least one cell in the first cell group, the data on the at least one logical channel included in the first logical channel group to the first compute node.

With reference to the third aspect, in some implementations of the third aspect, the sending unit is specifically configured to: perform, based on the configuration information, packet assembly on the data on the at least one logical channel included in the first logical channel group, to generate a medium access control protocol data unit MAC PDU; and send the MAC PDU to the first compute node by using the uplink grant resource of the at least one cell in the first cell group.

With reference to the third aspect, in some implementations of the third aspect, the MAC PDU includes at least one MAC service data unit SDU on the at least one logical channel included in the first logical channel group.

With reference to the third aspect, in some implementations of the third aspect, the at least one logical channel is determined based on a priority of data on a logical channel included in the first logical channel group.

With reference to the third aspect, in some implementations of the third aspect, the at least one cell is determined from the first cell group based on scheduling information from a network device.

According to a fourth aspect, a communication apparatus is provided. The communication apparatus may be used in the network device according to the second aspect. The apparatus includes: a processing unit, configured to determine configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; and a sending unit, configured to send the configuration information to a terminal device.

According to a fifth aspect, a communication apparatus is provided, and includes a processor and a memory. The memory is configured to store a computer program, and the processor is configured to execute the computer program stored in the memory, to enable the communication apparatus to perform the method according to any one of the first aspect, the second aspect, or the possible implementations of the first aspect and the second aspect.

According to a sixth aspect, a communication apparatus is provided, and includes an input/output interface and a logic circuit. The input/output interface is configured to obtain input information and/or output information. The logic circuit is configured to: perform the method according to any one of the first aspect, the second aspect, or the possible implementations of the first aspect and the second aspect, and perform processing and/or generate the output information based on the input information.

According to a seventh aspect, a computer-readable storage medium is provided. The computer-readable medium stores a computer program. When the computer program runs on a computer, the computer is enabled to perform the method according to any one of the first aspect, the second aspect, or the possible implementations of the first aspect and the second aspect.

According to an eighth aspect, a computer program product including instructions is provided. When the instructions are executed by a computer, a communication apparatus is enabled to implement the method according to any one of the first aspect, the second aspect, or the possible implementations of the first aspect and the second aspect.

The solutions provided in the second aspect to the eighth aspect are used to implement or cooperate to implement the methods provided in the first aspect and the second aspect, and therefore can achieve same or corresponding beneficial effects as those in the first aspect and the second aspect. Details are not described herein again.

### BRIEF DESCRIPTION OF DRAWINGS

FIG. 1 is a diagram of a communication system according to this application;
FIG. 2 is a diagram of a system architecture to which an embodiment of this application is applicable;
FIG. 3 is a diagram of a radio resource control (radio resource control, RRC) transmission solution for dual connectivity in 3GPP R15;
FIG. 4 is a diagram of a relationship between a protocol stack and a component carrier (component carrier, CC);
FIG. 5 is a diagram of a mapping relationship between packet assembly of a MAC PDU and a CC;
FIG. 6 is a diagram of a transmission path of an uplink data packet in a carrier aggregation scenario;
FIG. 7 is a diagram of a transmission path of an uplink data packet in a dual connectivity scenario;
FIG. 8 is a schematic interaction flowchart of a data transmission method according to an embodiment of this application;
FIG. 9 is a schematic interaction flowchart of an example of a data transmission method according to an embodiment of this application;
FIG. 10 is a diagram of a mapping relationship between a compute node, a cell group, and a logical channel group;
FIG. 11 is a schematic interaction flowchart of another example of a data transmission method according to an embodiment of this application;
FIG. 12 is a diagram of another mapping relationship between a compute node, a cell group, and a logical channel group;
FIG. 13 is a schematic interaction flowchart of another example of a data transmission method according to an embodiment of this application;
FIG. 14 is a diagram of another mapping relationship between a compute node, a cell group, and a logical channel group;
FIG. 15 is a block diagram of a communication apparatus according to an embodiment of this application;
FIG. 16 is a block diagram of another communication apparatus according to an embodiment of this application; and
FIG. 17 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a narrow band-internet of things (Narrow Band-Internet of Things, NB-IoT) system, a long term evolution (Long Term Evolution, LTE) system, an LTE frequency division duplex (frequency division duplex, FDD) system, an LTE time division duplex (time division duplex, TDD) system, a worldwide interoperability for microwave access (Worldwide Interoperability for Microwave Access, WiMAX) communication system, a 5th generation (5th generation, 5G) system, or a new radio (new radio, NR) system. In addition, the technical solutions may be further applicable to a subsequent evolved system, for example, a 6th generation (6G) communication system, or even a higher-level 7th generation (7G) communication system.

An access network device in embodiments of this application may be a device for communicating with a terminal device, may be a base station, an access point, or a network device, or may be a device that communicates with a wireless terminal over an air interface in an access network by using one or more sectors. The network device may be configured to mutually convert a received over-the-air frame and an IP packet and serve as a router between the wireless terminal and a rest portion of the access network, where the rest portion of the access network may include an Internet protocol (IP) network. The network device may further coordinate attribute management of the air interface. For example, the access network device may be an evolved NodeB (evolved NodeB, eNB, or eNodeB) in an LTE system, a radio controller in a cloud radio access network (cloud radio access network, CRAN) scenario, or the access device may be a relay station, an access point, a vehicle-mounted device, a wearable device, an access device in a future 5G network, a network device in a future evolved PLMN network, or the like, may be an access point (access point, AP) in a WLAN, or may be a gNB in a new radio (new radio, NR) system. This is not limited in embodiments of this application. It should be noted that, in the 5G system, there may be one or more transmission reception points (Transmission Reception Points, TRPs) under one base station. All TRPs belong to a same cell. A measurement reporting method described in embodiments of this application may be used for each TRP and the terminal. In another scenario, the network device may further include a control unit (Control Unit, CU) and a data unit (Data Unit, DU). The CU and the DU may be placed in different places. For example, the DU is placed remotely in an area with a high traffic volume, and the CU is placed in a central equipment room. The CU and the DU may alternatively be placed in a same equipment room. The CU and the DU may alternatively be different components in a rack. A difference between a CU-DU separation scenario and a multi-TRP scenario lies in that a TRP only serves as a radio frequency unit or an antenna device, but a DU may implement a protocol stack function, where for example, the DU may implement a physical layer function.

In addition, in embodiments of this application, the access network device is a device in a radio access network (radio access network, RAN), in other words, a RAN node that connects the terminal device to a wireless network. For example, by way of example but not limitation, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

The access network device provides a service for a cell. The terminal device communicates with the access network device by using a transmission resource (for example, a frequency domain resource, or a spectrum resource) used for the cell. The cell may be a cell corresponding to the access network device (for example, a base station), and the cell may belong to a macro base station, or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing a high-rate data transmission service.

The terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

By way of example but not limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or thing-thing interconnection.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood as that any device that can perform data communication with the base station may be considered as a terminal device.

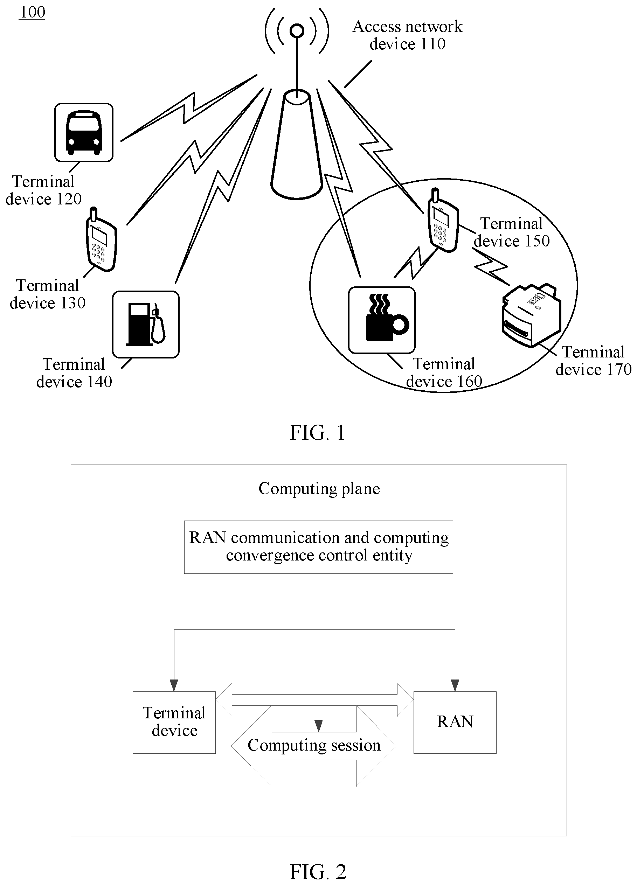

FIG. 1 is a diagram of a communication system 100 according to this application. In FIG. 1, an access network device 110, a terminal device 120, a terminal device 130, a terminal device 140, a terminal device 150, a terminal device 160, and a terminal device 170 are included. For example, the access network device 110 works in an evolved universal mobile telecommunications system terrestrial radio access (evolved UMTS terrestrial radio access, E-UTRA) system, works in an NR system, or works in a next-generation communication system or another communication system. The access network device 110 may communicate with the terminal device 120 to the terminal device 170 through Uu interfaces, and the access network device 110 and the terminal device 120 to the terminal device 170 form a communication system. In the communication system, the terminal device 120 to the terminal device 170 may send uplink data to the access network device 110, the access network device 110 needs to receive the uplink data sent by the terminal device 120 to the terminal device 170, and the access network device 110 may send downlink data to the terminal device 120 to the terminal device 170. In addition, the terminal device 150 to the terminal device 170 may also form a communication system. In the communication system, the access network device may send downlink information to the terminal device 150, and the terminal device 150 may also send downlink information to terminal devices 160 and 170.

In this application, one access network device may serve a plurality of terminal devices. In FIG. 1, only some of the terminal devices are used as examples.

In FIG. 1, the access network device is, for example, a base station. The access network device corresponds to different devices in different systems. For example, the access network device may correspond to an eNB in a 4G system, and corresponds to an access network device in 5G in a 5G system, for example, a gNB. The technical solutions provided in embodiments of this application may also be applied to a future mobile communication system. Therefore, the access network device in FIG. 1 may alternatively correspond to an access network device in the future mobile communication system. In FIG. 1, an example in which the access network device is the base station is used. Actually, with reference to the foregoing descriptions, the access network device may alternatively be a device such as an RSU.

FIG. 2 is a diagram of a system architecture to which an embodiment of this application is applicable. A RAN communication and computing convergence control entity (module or unit) has the following functions: a computing execution control function like computational power perception/computational power scheduling/computational power convergence, and a computing transmission control function like computing radio bearer scheduling, and a general computing convergence context. Small-scale real-time collaboration can support compute resources to adapt to dynamic radio environment changes, such as channel changes and mobility changes.

The RAN communication and computing convergence control entity includes an RRC function and a compute resource control (compute resource control, CRC) function. The RRC function implements control functions related to computing transmission, such as control of a computing radio bearer and management of a computing context. The CRC function implements control functions related to computing execution, such as computational power perception, computational power reporting, and related configuration control of a computation module in a terminal device, computational power configuration and scheduling of the computation module in the terminal device, computational power convergence between base stations, computing quality of service (quality of service, QoS) management, a resource perception and reporting event of the computation module in the terminal device, cell computational power resource broadcast, and computing service paging initiated by a next-generation core network (core network, CN) or a next-generation RAN.

The terminal device and the RAN have a computing execution function, and execution of the computing execution function is a process of performing computing on an allocated compute resource. The computing execution function includes functions such as unified modeling and measurement of underlying heterogeneous compute resources, unified conversion of computing capabilities required by various compute tasks, serial/parallel computing based on computing operation orchestration, and computing, storage, and quantization based on configured precision. A compute node may be located in the RAN, and the compute node has a computing execution function.

A computing service and a communication service belong to different service types, and a transmission bearer of computing service data needs to be distinguished from a transmission bearer of communication service data. A protocol data unit (protocol data unit, PDU) session connecting the terminal device and a data network (data network, DN) includes a data radio bearer between the terminal device and a base station, and a general packet radio service (general packet radio service, GPRS) tunneling protocol-user plane (GPRS tunneling protocol-user plane, GTP-U) tunnel between the base station and a UPF. In addition, due to different service models, the computing service data may have a special interaction mode between network nodes participating in computing, and may have a special requirement for connection quality.

The computing session may be established on a computing radio bearer or a computing bearer. The computing radio bearer is a data transmission channel between the computing execution function of the terminal device and a computing execution function of the base station. The computing bearer is a data transmission channel between computing execution functions of different base stations, a data transmission channel between computing execution functions of different parts of a base station, or a data transmission channel between the computing execution function of the base station and a computing execution function of a core network.

To facilitate understanding of embodiments of this application, the following briefly describes technical solutions related to embodiments of this application.

### 1. Computational power network convergence trend

In a new computational power network architecture, network elements not only have control and forwarding capabilities, but also have a capability of computing and processing data, for example, AI computing, perception computing, and scientific computing. In addition to the network elements, a compute node is further deployed in a network. Computational power generated in this computing-network integration mode is referred to as network native computational power. At the beginning of network design, computational power is considered as a basic element of a network. The computational power is spread throughout the network, widely distributed in a cloud, an edge, a device, and an intermediate network element, and is integrated into the network. A computational power service, a connection service, and a service in which computational power and connection are comprehensively considered are all used as basic services that the network can provide externally. The network native computational power can promote the development and deployment of network native intelligence, better support ubiquitous base stations and terminal devices with perception, communication, and computing capabilities, implement large-scale intelligent distributed collaboration services, maximize the utility of communication and computational power on the network, adapt to data distribution, and protect data privacy. In the new network architecture, control planes of the network element and the compute node are streamlined, which can compensate for a shortage in streamlining management planes of the network element and the compute node, and can respond to movement of a terminal device and a network change in a timely manner. The network native computational power can promote the generation and development of future intelligent applications, such as immersive cloud XR, holographic communication, sensory interconnection, smart interaction, communication perception, and digital twin.

### 2. Carrier aggregation and dual connectivity

### (1) Carrier aggregation

In LTE/NR, in a CA scenario, a terminal device is allowed to simultaneously transmit data by using radio resources of a plurality of cells, where one cell is referred to as a primary cell (Primary Cell, PCell), and other cells are referred to as secondary cells (Secondary Cells, SCells).

### (2) Dual connectivity

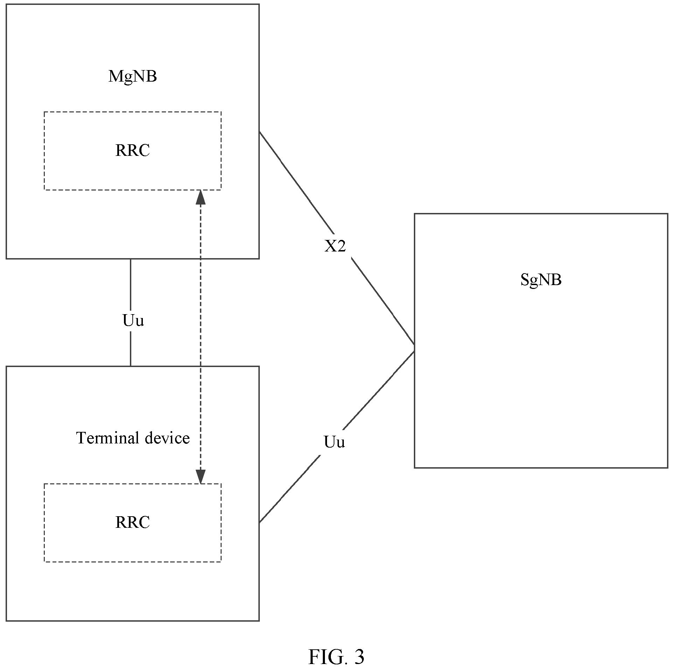

An NR dual connectivity technology is used as an example, a gNodeB that provides an access and mobility management function (access and mobility management function, AMF) connection is referred to as a master base station (MgNB), and a serving cell group controlled by the master base station is referred to as a master cell group (master cell group, MCG). Another gNodeB that provides an additional resource is referred to as a secondary base station (SgNB), and a serving cell group controlled by the secondary base station is referred to as a secondary cell group (secondary cell group, SCG). In an NR dual connectivity system, all RRC signaling messages and functions required by a terminal device are managed by the master base station, for example, common radio resource configuration, dedicated radio resource configuration, measurement, and mobility management. FIG. 3 is a diagram of a dual connectivity RRC transfer solution in 3GPP Release 15 (R15). In the R15 specification, after radio resource management functions of the master base station and the secondary base station are coordinated, the master base station generates a final RRC message and sends the final RRC message to the terminal device. The terminal device considers that all RRC messages are sent only by the MgNB, and therefore responds only to the MgNB.

### 3. Data transmission protocol

Currently, in an NR system, a terminal device performs uplink transmission of a data packet based on the following data transmission protocol.
(1) A data packet does not undergo data splitting from an SDAP layer, a PDCP layer, an RLC layer, and a MAC layer to a primary cell/secondary cell/ primary secondary cell (primary secondary cell, PSCell).
(2) One MAC protocol data unit (protocol data unit, PDU) may include N quality of service (service quality, QoS) flows and n data radio bearers (data radio bearers, DRBs), where N and n are positive integers.
(3) A radio bearer (radio bearer, RB), an RLC channel (RLC channel), and a logical channel (logical channel, LCH) are one-to-one mapped to each other.
(4) One MAC PDU may include data in one or more LCHs.
(5) One MAC PDU may be transmitted on any CC, which may be understood as that one MAC PDU may be sent by using an uplink grant resource of any cell.
(6) A MAC PDU transmitted on a CC may include service data units (service data units, SDUs) of a plurality of RBs.

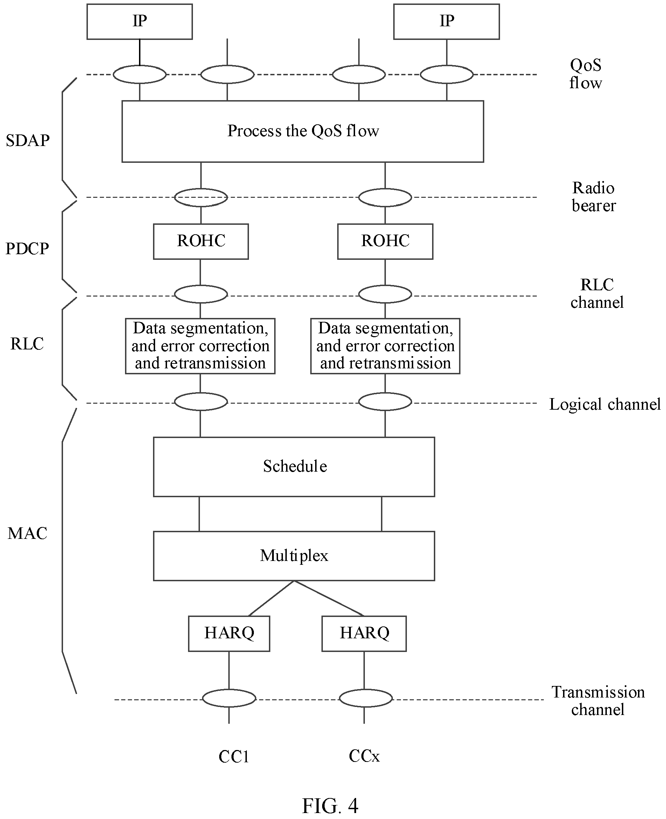

FIG. 4 is a diagram of a relationship between a protocol stack and a CC. Quality of service flows from different internet protocol (internet protocol, IP) addresses are processed at the SDAP layer, and then are transmitted to the PDCP layer through the RB. Data undergoes robust header compression (robust header compression, ROHC) at the PDCP layer and then is transmitted to the RLC layer through the RLC channel. Data is transmitted from the RLC layer to the MAC layer through a logical channel, and error correction and retransmission may be performed, at the RLC layer, on some data that fails to be transmitted. The data is transmitted, through a transmission channel via an uplink grant resource of any CC, from the MAC layer to a base station corresponding to the CC. Processing such as scheduling, physical channel multiplexing, and hybrid automatic repeat request (hybrid automatic repeat request, HARQ) may be performed, at the MAC layer, on the data.

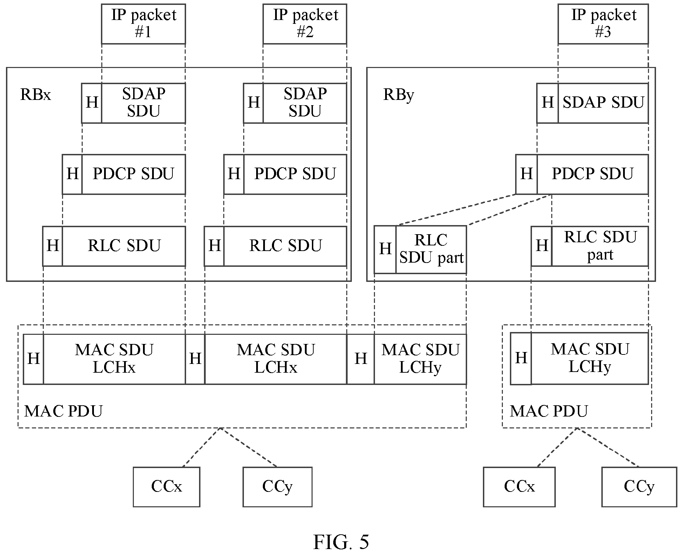

FIG. 5 is a diagram of a mapping relationship between packet assembly of a MAC PDU and a CC. Data in one MAC PDU may be from different IP addresses, and one MAC PDU may be transmitted on any CC. For example, all RLC SDUs corresponding to an IP packet #1 from an IP address 1, all RLC SDUs corresponding to an IP packet #2 from an IP address 2, and some RLC SDUs corresponding to an IP packet #3 from an IP address 3 may form one MAC PDU, and the MAC PDU may be transmitted on a CCx or a CCy. For example, other RLC SDUs corresponding to the IP packet #3 from the IP address 3 may form one MAC PDU, and the MAC PDU may also be transmitted on a CCx or a CCy.

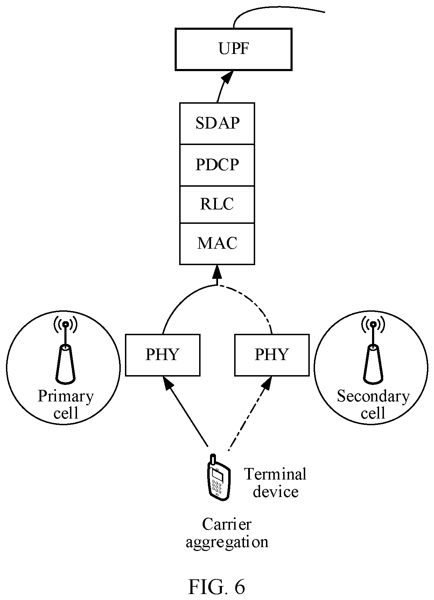

FIG. 6 is a diagram of a transmission path of an uplink data packet in a carrier aggregation scenario. In the CA scenario, the PCell and the SCell share a MAC entity, an RLC entity, a PDCP entity, and an SDAP entity, and data is not split and identified at the MAC layer, the RLC layer, the PDCP layer, and the like. The terminal device sends an uplink data packet to the PCell/SCell through a PUSCH at a PHY layer. The PCell performs convergence for PUSCHs of the PCell and the SCell at the MAC layer, and sends the uplink data packet of the terminal device to the UPF via the RLC entity, the PDCP entity, and the SDAP entity. If a compute node is deployed at each of the PCell and the SCell, an uplink data packet that needs to be sent to the compute node corresponding to the PCell may be forwarded by the UPF to the compute node corresponding to the PCell, and cannot be directly sent, based on the PCell, to the compute node corresponding to the PCell; and an uplink data packet that needs to be sent to the compute node corresponding to the SCell needs to be forwarded by the UPF to the compute node corresponding to the SCell, and cannot be directly sent, based on the SCell, to the compute node corresponding to the SCell.

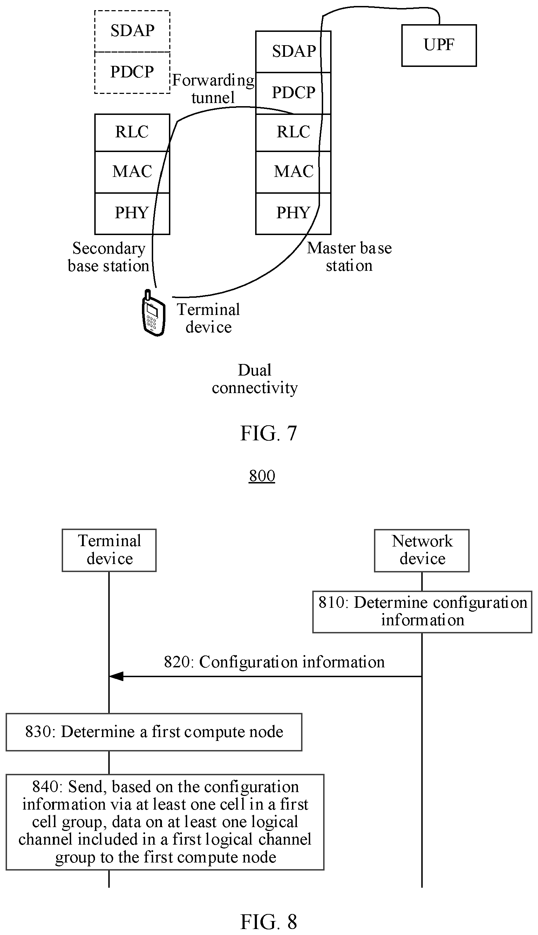

FIG. 7 is a diagram of a transmission path of an uplink data packet in a dual connectivity scenario. In the DC scenario, both a master base station and a secondary base station have complete protocol stacks. When data splitting is performed by the master base station, the secondary base station has a corresponding RLC, MAC, and PHY. An uplink data packet that needs to be sent by a terminal device via the secondary base station passes through an RLC layer of the secondary base station, undergoes convergence at a PDCP layer of the master base station, and finally is sent to a UPF through an SDAP of the master base station. If a compute node is deployed at each of the master base station and the secondary base station, an uplink data packet that needs to be sent to the compute node corresponding to the master base station may be forwarded by the UPF to the compute node corresponding to the master base station, and cannot be directly sent, via the master base station, to the compute node corresponding to the master base station; and an uplink data packet that needs to be sent to the compute node corresponding to the secondary base station needs to be forwarded by the UPF to the compute node corresponding to the secondary base station, and cannot be directly sent, via the secondary base station, to the compute node corresponding to the secondary base station.

In view of this, embodiments of this application provide a data transmission method, so that data that needs to be sent to a first compute node can be directly sent to the compute node based on a cell corresponding to the compute node, and does not need to be forwarded to the first compute node via a UPF, thereby achieving effect of reducing a transmission delay, improving communication efficiency, and reducing transmission overheads.

FIG. 8 is a schematic interaction flowchart of a data transmission method 800 according to an embodiment of this application. An embodiment of this application is applicable to a carrier aggregation scenario, and is also applicable to a dual connectivity scenario. A network device in this embodiment of this application may be a base station.

810: A network device determines configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups. For example, a cell group in this embodiment of this application may be a master cell group or a secondary cell group in the dual connectivity scenario, or a primary cell or a secondary cell in the carrier aggregation scenario.

820: The network device sends the configuration information to a terminal device, and correspondingly, the terminal device receives the configuration information from the network device. One cell group may include one or more cells, and one logical channel group includes a plurality of logical channels.

For example, the configuration information indicates the one-to-one correspondence between the plurality of compute nodes and the plurality of cell groups, and the one-to-one correspondence between the plurality of cell groups and the plurality of logical channel groups. For example, the configuration information indicates the one-to-one correspondence between the plurality of cell groups and the plurality of logical channel groups, and the one-to-one correspondence between the plurality of compute nodes and the plurality of logical channel groups. For example, the configuration information indicates the one-to-one correspondence between the plurality of compute nodes and the plurality of cell groups, and the one-to-one correspondence between the plurality of compute nodes and the plurality of logical channel groups.

Optionally, in the carrier aggregation scenario, the network device that sends the configuration information to the terminal device may be a base station corresponding to the primary cell. Optionally, in the dual connectivity scenario, the network device that sends the configuration information to the terminal device may be a base station corresponding to a primary cell in the master cell group, or may be a base station corresponding to a primary secondary cell in the secondary cell group.

830: The terminal device determines a first compute node. The first compute node is configured to execute a computing execution function.

840: The terminal device sends, based on the configuration information via at least one cell in a first cell group, data on at least one logical channel included in a first logical channel group to the first compute node, where the first cell group, the first compute node, and the first logical channel group correspond to each other, the plurality of compute nodes include the first compute node, the plurality of logical channel groups include the first logical channel group, and the plurality of cell groups include the first cell group. Correspondingly, the first compute node receives, from the terminal device, the data on the at least one logical channel included in the first logical channel group. The first compute node may be understood as a compute node corresponding to the first cell group, and the first cell group corresponds to the first logical channel group.

Optionally, the first compute node may be located in a base station corresponding to a cell included in the first cell group, and is deployed on a same physical node as the base station corresponding to the cell included in the first cell group. The first compute node and the network device that sends the configuration information to the terminal device may be a same device, or may be different devices. For example, in the carrier aggregation scenario, the network device that sends the configuration information to the terminal device is the base station corresponding to the primary cell, the first compute node is a base station corresponding to the secondary cell, and the base station corresponding to the primary cell and the base station corresponding to the secondary cell are different base stations. In this case, the first compute node and the network device that sends the configuration information to the terminal device are different devices. For another example, in the dual connectivity scenario, the network device that sends the configuration information to the terminal device is the base station corresponding to the primary cell in the master cell group, and the first compute node is also the base station corresponding to the primary cell in the master cell group. In this case, the first compute node and the network device that sends the configuration information to the terminal device are a same device.

That the terminal device sends the data on the at least one logical channel included in the first logical channel group to the first compute node may be understood as follows: The terminal device sends data on one logical channel included in the first logical channel group to the first compute node, or the terminal device sends data on a plurality of logical channels included in the first logical channel group to the first compute node, or the terminal device sends data on all logical channels included in the first logical channel group to the first compute node.

For example, the terminal device performs, based on the configuration information, packet assembly on the data on the at least one logical channel included in the first logical channel group, to generate a MAC PDU; and the terminal device sends the MAC PDU to the first compute node by using an uplink grant resource of the at least one cell included in the first cell group.

Optionally, the MAC PDU includes at least one MAC SDU on the at least one logical channel included in the first logical channel group; and each logical channel includes one or more MAC SDUs.

Optionally, before the terminal device sends the data on the at least one logical channel included in the first logical channel group to the first compute node, the terminal device caches, based on the configuration information, the data that needs to be sent to the first compute node into the at least one logical channel included in the first logical channel group corresponding to the first compute node. Specifically, the terminal device determines, based on the configuration information, the first logical channel group corresponding to the first compute node; and the terminal device caches the data that needs to be sent to the first compute node into the at least one logical channel included in the first logical channel group. Based on this optional solution, the terminal device may identify, at a MAC layer based on the one-to-one correspondence between the plurality of compute nodes and the plurality of logical channel groups, the data that needs to be sent to the first compute node in the plurality of compute nodes, and cache the data at the MAC layer.

Optionally, before the terminal device sends, based on the at least one cell in the first cell group, the data on the at least one logical channel included in the first logical channel group to the first compute node, the terminal device receives uplink grant information, where the uplink grant information is used to determine the uplink grant resource of the at least one cell in the first cell group. For example, the terminal device sends, based on the configuration information by using an uplink grant resource of a first cell in the first cell group, the data on the at least one logical channel included in the first logical channel group to the first compute node; and the terminal device may further send, by using an uplink grant resource of a second cell in the first cell group, the data on the at least one logical channel included in the first logical channel group to the first compute node. Based on this optional solution, the uplink grant resource obtained by the terminal device is the uplink grant resource of the at least one cell in the first cell group corresponding to the first compute node. The terminal device may directly send, by using the uplink grant resource, the data that needs to be sent to the first compute node to the first compute node, and does not need to send the data to a UPF by using an uplink grant resource corresponding to another cell group other than the first cell group, where the data is then forwarded to the first compute node via the UPF.

For example, in the carrier aggregation scenario, the base station corresponding to the primary cell sends uplink grant information of the primary cell to the terminal device. Correspondingly, the terminal device receives the uplink grant information of the primary cell, where the primary cell may be a cell in the first cell group. Alternatively, the base station corresponding to the secondary cell sends uplink grant information of the secondary cell to the terminal device. Correspondingly, the terminal device receives the uplink grant information of the secondary cell, where the secondary cell may be a cell in the first cell group. Alternatively, the base station corresponding to the first cell sends uplink grant information of the first cell to the terminal device. Correspondingly, the terminal device receives the uplink grant information of the first cell. It should be understood that, in the carrier aggregation scenario, one carrier one-to-one corresponds to one cell.

For example, in the dual connectivity scenario, a base station corresponding to any cell in the master cell group sends uplink grant information to the terminal device. Correspondingly, the terminal device receives the uplink grant information from the base station corresponding to any cell in the master cell group. Alternatively, a base station corresponding to any cell in the secondary cell group sends uplink grant information to the terminal device. Correspondingly, the terminal device receives the uplink grant information from the base station corresponding to any cell in the secondary cell group. The master cell group or the secondary cell group includes at least one cell.

Optionally, the at least one logical channel included in the first logical channel group is determined by the terminal device based on a priority of data on a logical channel included in the first logical channel group. Priorities of data on different logical channels included in the first logical channel group are different. For example, the at least one logical channel included in the first logical channel group is a logical channel whose data has a higher priority in a logical channel included in the first logical channel group.

Optionally, the at least one cell in the first cell group is determined by the terminal device from the first cell group based on scheduling information from a network device. For example, the at least one cell in the first cell group is determined by the terminal device from the first cell group based on uplink grant information from the network device.

It should be understood that, in this embodiment of this application, the configuration information includes the correspondence between the compute nodes and the cell groups, the correspondence between the cell groups and the logical channel groups, or the correspondence between the compute nodes and the groups. The terminal device determines one or more cells in the first cell group based on the configuration information. After obtaining the corresponding correspondence from the configuration information, the terminal device determines to send data on at least one logical channel in one logical channel group to a compute node based on at least one cell in one cell group. When performing packet assembly on the data, the terminal device selects, according to a specific criterion, a specific cell (or cells) in the cell group to send data on a specific logical channel (or logical channels) in the logical channel group. For example, the terminal device determines, based on the scheduling information (for example, the uplink grant information) from the network device, a specific cell (or cells) that is in the cell group and that is to be used, and the terminal device determines, based on priorities of service data, a specific logical channel (or logical channels) that is in the logical channel group and that has data to be transmitted by the terminal device.

Optionally, the network device that sends the configuration information to the terminal device and the network device that sends the uplink grant information to the terminal device may be a same device, or may be different devices. For example, in the carrier aggregation scenario, the network device that sends the configuration information to the terminal device is the base station corresponding to the primary cell, the network device that sends the uplink grant information to the terminal device is the base station corresponding to the secondary cell, and the base station corresponding to the primary cell and the base station corresponding to the secondary cell are different base stations. In this case, the network device that sends the configuration information to the terminal device and the network device that sends the uplink grant information to the terminal device are different devices. For another example, in the dual connectivity scenario, the network device that sends the configuration information to the terminal device is the base station corresponding to the primary cell in the master cell group, and the network device that sends the uplink grant information to the terminal device is also the base station corresponding to the primary cell in the master cell group. In this case, the network device that sends the configuration information to the terminal device and the network device that sends the uplink grant information to the terminal device are a same device.

In the technical solution provided in embodiments of this application, the configuration information received by the terminal device may be used to determine the one-to-one correspondences between the plurality of compute nodes, the plurality of cell groups, and the plurality of logical channel groups. The data that needs to be sent to the first compute node may be cached on the at least one logical channel included in the first logical channel group corresponding to the first compute node, and the data on the at least one logical channel included in the first logical channel group is sent to the first compute node by using the uplink grant resource of the at least one cell in the first cell group corresponding to the first compute node. According to the technical solution provided in this embodiment of this application, identification and packet assembly can be performed, at the MAC layer, on the data that needs to be sent to the first compute node, so that the data that needs to be sent to the first compute node can be directly sent to the first compute node based on the cell corresponding to the first compute node, and does not need to be forwarded to the first compute node via the UPF, thereby reducing a transmission delay, improving communication efficiency, and reducing transmission overheads. For example, in the carrier aggregation scenario, the first cell group includes the secondary cell, but does not include the primary cell. The terminal device may send, by using an uplink grant resource of the secondary cell, the data on the at least one logical channel included in the first logical channel group to the first compute node, and does not need to send, based on the primary cell, the data on the at least one logical channel included in the first logical channel group to the UPF, so that the data does not need to be forwarded to the first compute node via the UPF. For another example, in the dual connectivity scenario, the first cell group includes the secondary cell group, but does not include the master cell group. The terminal device may send, by using an uplink grant resource of a cell in the secondary cell group, the data on the at least one logical channel included in the first logical channel group to the first compute node, and does not need to send, based on a cell in the master cell group, the data on the at least one logical channel included in the first logical channel group to the UPF, so that the data does not need to be forwarded to the first compute node via the UPF.

The following describes the data transmission method provided in embodiments of this application with reference to a specific example.

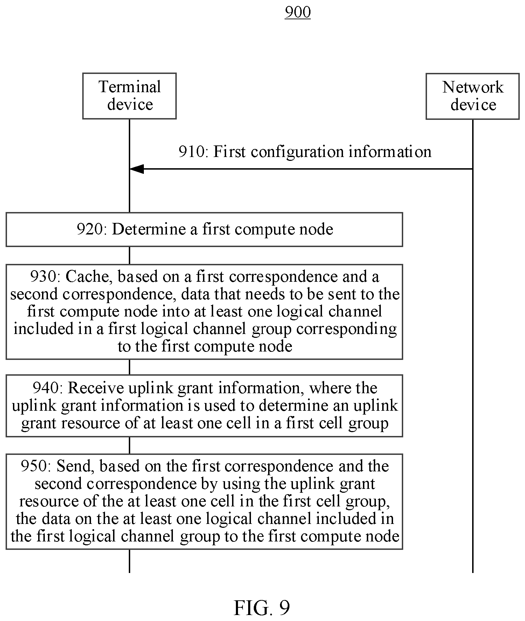

FIG. 9 is a schematic interaction flowchart of an example of a data transmission method 900 according to an embodiment of this application.

910: A network device determines first configuration information, and sends the first configuration information to a terminal device, where the first configuration information indicates a first correspondence and a second correspondence, the first correspondence includes a one-to-one correspondence between a plurality of compute nodes and a plurality of cell groups, and the second correspondence includes a one-to-one correspondence between the plurality of cell groups and a plurality of logical channel groups. Correspondingly, the terminal device receives the first configuration information from the network device. For example, secondary cell configuration signaling sent by the network device to the terminal device includes the first configuration information, and the first correspondence and the second correspondence that are indicated by the first configuration information may be applied to uplink transmission and/or downlink transmission.

920: The terminal device determines a first compute node. The first compute node is configured to execute a computing execution function.

930: The terminal device caches, based on the first correspondence and the second correspondence, data that needs to be sent to the first compute node into at least one logical channel included in a first logical channel group corresponding to the first compute node, where the plurality of compute nodes include the first compute node, and the plurality of logical channel groups include the first logical channel group. Specifically, the terminal device determines, based on the first correspondence and the second correspondence, the first logical channel group corresponding to the first compute node; and the terminal device caches the data that needs to be sent to the first compute node into the at least one logical channel included in the first logical channel group.

940: The terminal device receives uplink grant information, where the uplink grant information is used to determine an uplink grant resource of at least one cell in a first cell group, and the plurality of cell groups include the first cell group.

950: The terminal device sends, based on the first correspondence and the second correspondence by using the uplink grant resource of the at least one cell in the first cell group, the data on the at least one logical channel included in the first logical channel group to the first compute node, where the first cell group, the first compute node, and the first logical channel group correspond to each other.

For example, the terminal device performs, based on the first correspondence and the second correspondence, packet assembly on the data on the at least one logical channel included in the first logical channel group, to generate a MAC PDU; and the terminal device sends the MAC PDU to the first compute node by using the uplink grant resource of the at least one cell included in the first cell group.

Optionally, the MAC PDU includes at least one MAC SDU on the at least one logical channel included in the first logical channel group.

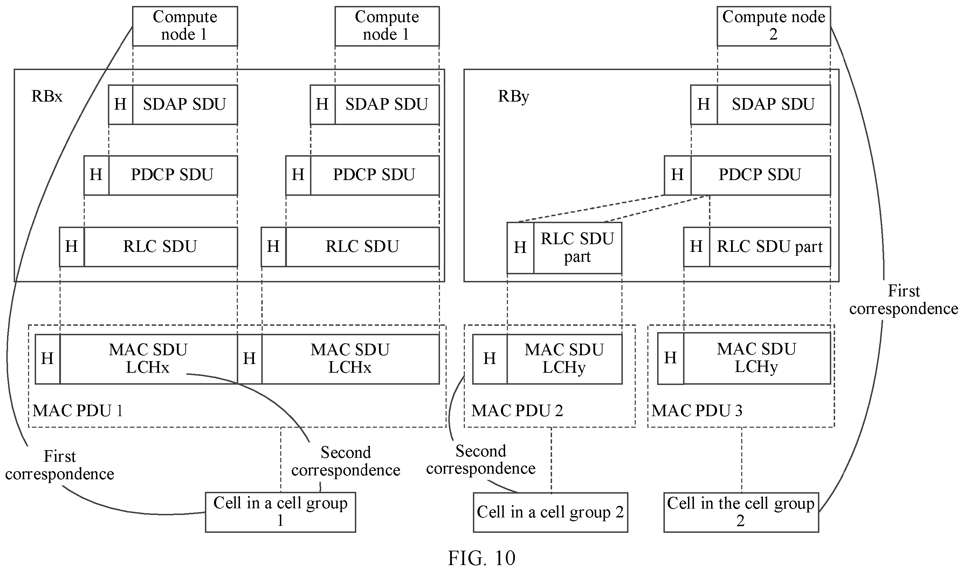

FIG. 10 is a diagram of a mapping relationship between a compute node, a cell group, and a logical channel group. The first correspondence includes a correspondence between a compute node 1 and a cell group 1, and a correspondence between a compute node 2 and a cell group 2. The second correspondence includes a correspondence between the cell group 1 and a logical channel group 1, and a correspondence between the cell group 2 and a logical channel group 2. The compute node 1, the cell group 1, and the logical channel group 1 correspond to each other, where the logical channel group 1 includes a plurality of LCHxs; and the compute node 2, the cell group 2, and the logical channel group 2 correspond to each other, where the logical channel group 2 includes a plurality of LCHys.

In this embodiment of this application, the second correspondence includes the correspondence between the cell group 1 and the logical channel group 1. When the terminal device performs packet assembly on data on at least one logical channel included in the logical channel group 1, the terminal device selects, according to a specific criterion, a specific logical channel (or logical channels) that is in the logical channel group 1 and that has data on which the terminal device is to perform packet assembly. For example, the terminal device determines, based on scheduling information from the network device, a specific cell (or cells) that is in a corresponding cell group and that is to be used, and the terminal device determines, based on priorities of service data, a specific logical channel (or logical channels) that is in a corresponding logical channel group and that has data to be transmitted by the terminal device.

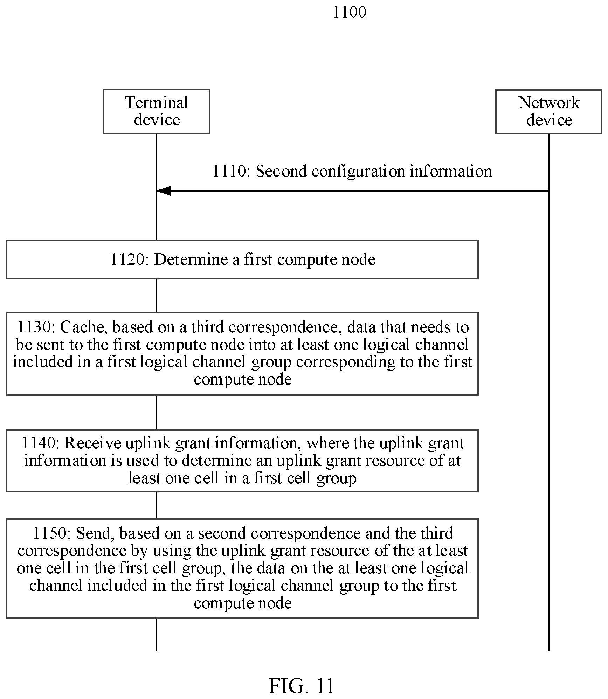

FIG. 11 is a schematic interaction flowchart of another example of a data transmission method 1100 according to an embodiment of this application.

1110: A network device determines second configuration information, and sends the second configuration information to a terminal device, where the second configuration information indicates a second correspondence and a third correspondence, the second correspondence includes a one-to-one correspondence between a plurality of cell groups and a plurality of logical channel groups, and the third correspondence includes a one-to-one correspondence between a plurality of compute nodes and the plurality of logical channel groups. Correspondingly, the terminal device receives the second configuration information from the network device. For example, MAC configuration signaling sent by the network device to the terminal device may include the second configuration information indicating the third correspondence, and secondary cell configuration signaling sent by the network device to the terminal device may include the second configuration information indicating the second correspondence.

1120: The terminal device determines a first compute node. The first compute node is configured to execute a computing execution function.

1130: The terminal device caches, based on the third correspondence, data that needs to be sent to the first compute node into at least one logical channel included in a first logical channel group corresponding to the first compute node, where the plurality of compute nodes include the first compute node, and the plurality of logical channel groups include the first logical channel group.

1140: The terminal device receives uplink grant information, where the uplink grant information is used to determine an uplink grant resource of at least one cell in a first cell group, and the plurality of cell groups include the first cell group.

1150: The terminal device sends, based on the second correspondence and the third correspondence by using the uplink grant resource of the at least one cell in the first cell group, the data on the at least one logical channel included in the first logical channel group to the first compute node, where the first cell group, the first compute node, and the first logical channel group correspond to each other.

For example, the terminal device performs, based on the third correspondence, packet assembly on the data on the at least one logical channel included in the first logical channel group, to generate a MAC PDU; and the terminal device sends the MAC PDU to the first compute node based on the second correspondence by using the uplink grant resource of the at least one cell included in the first cell group.

Optionally, the MAC PDU includes at least one MAC SDU on the at least one logical channel included in the first logical channel group.

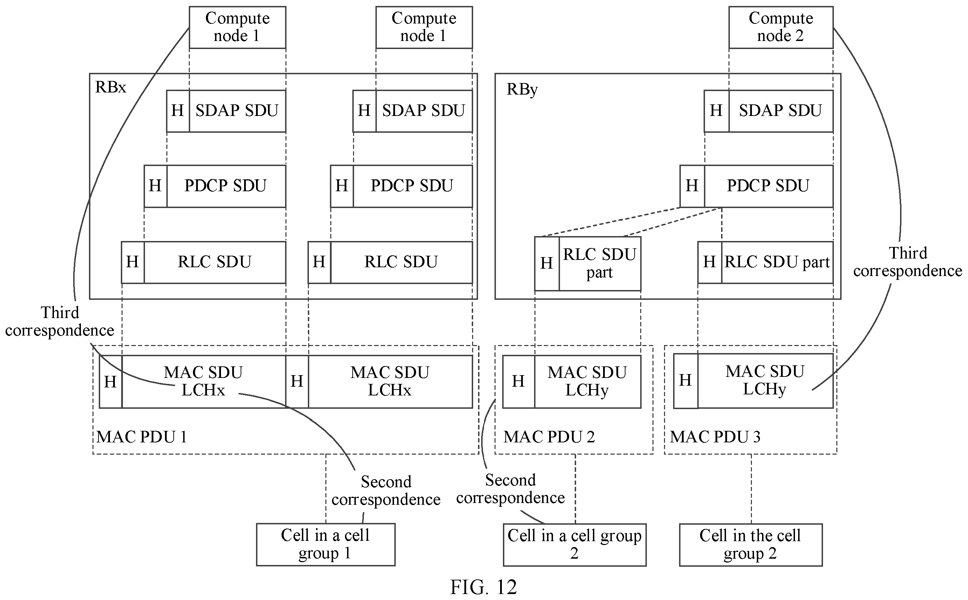

FIG. 12 is a diagram of another mapping relationship between a compute node, a cell group, and a logical channel group. The second correspondence includes a correspondence between a cell group 1 and a logical channel group 1, and a correspondence between a cell group 2 and a logical channel group 2. The third correspondence includes a correspondence between a compute node 1 and the logical channel group 1, and a correspondence between a compute node 2 and the logical channel group 2. The compute node 1, the cell group 1, and the logical channel group 1 correspond to each other, where the logical channel group 1 includes a plurality of LCHxs; and the compute node 2, the cell group 2, and the logical channel group 2 correspond to each other, where the logical channel group 2 includes a plurality of LCHys.

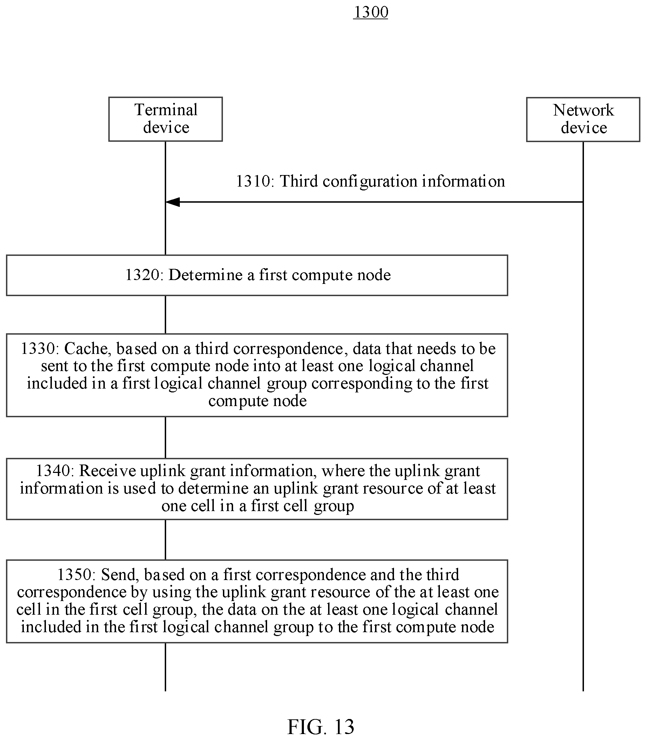

FIG. 13 is a schematic interaction flowchart of another example of a data transmission method 1300 according to an embodiment of this application.

1310: A network device determines third configuration information, and sends the third configuration information to a terminal device, where the third configuration information indicates a first correspondence and a third correspondence, the first correspondence includes a one-to-one correspondence between a plurality of compute nodes and a plurality of cell groups, and the third correspondence includes a one-to-one correspondence between the plurality of compute nodes and a plurality of logical channel groups. Correspondingly, the terminal device receives the third configuration information from the network device. For example, compute node configuration signaling sent by the network device to the terminal device may include the third configuration information indicating the third correspondence, and secondary cell configuration signaling sent by the network device to the terminal device may include the third configuration information indicating the first correspondence.

1320: The terminal device determines a first compute node. The first compute node is configured to execute a computing execution function.

1330: The terminal device caches, based on the third correspondence, data that needs to be sent to the first compute node into at least one logical channel included in a first logical channel group corresponding to the first compute node, where the plurality of compute nodes include the first compute node, and the plurality of logical channel groups include the first logical channel group.

1340: The terminal device receives uplink grant information, where the uplink grant information is used to determine an uplink grant resource of at least one cell in a first cell group, and the plurality of cell groups include the first cell group.

1350: The terminal device sends, based on the first correspondence and the third correspondence by using the uplink grant resource of the at least one cell in the first cell group, the data on the at least one logical channel included in the first logical channel group to the first compute node, where the first cell group, the first compute node, and the first logical channel group correspond to each other.

For example, the terminal device performs, based on the third correspondence, packet assembly on the data on the at least one logical channel included in the first logical channel group, to generate a MAC PDU; and the terminal device sends the MAC PDU to the first compute node based on the first correspondence and the third correspondence by using the uplink grant resource of the at least one cell included in the first cell group.

Optionally, the MAC PDU includes at least one MAC SDU on the at least one logical channel included in the first logical channel group.

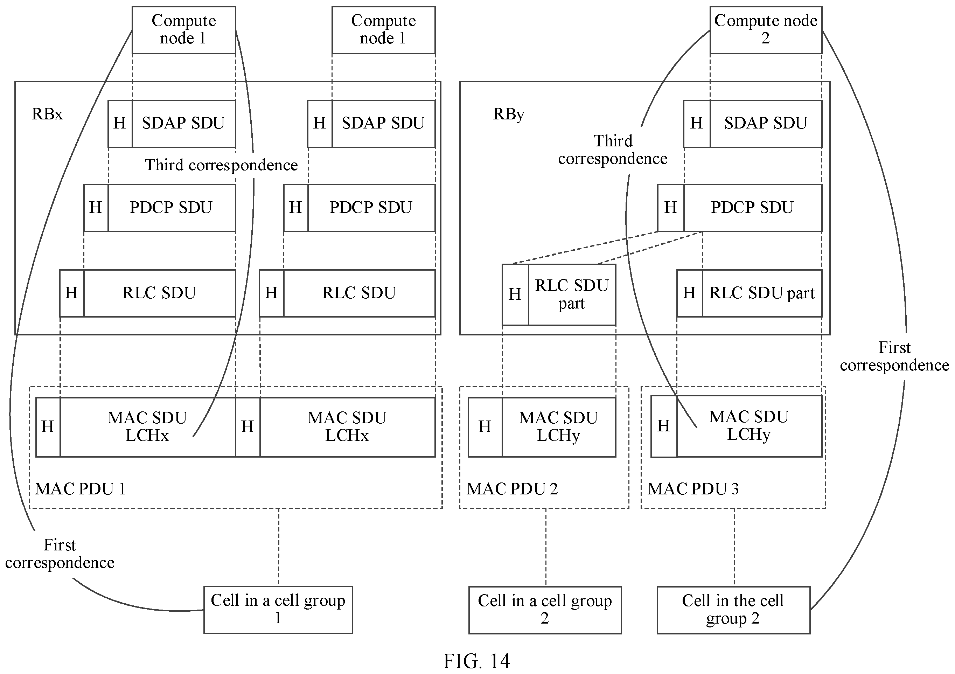

FIG. 14 is a diagram of another mapping relationship between a compute node, a cell group, and a logical channel group. The first correspondence includes a correspondence between a compute node 1 and a cell group 1, and a correspondence between a compute node 2 and a cell group 2. The third correspondence includes a correspondence between the compute node 1 and a logical channel group 1, and a correspondence between the compute node 2 and a logical channel group 2. The compute node 1, the cell group 1, and the logical channel group 1 correspond to each other, where the logical channel group 1 includes a plurality of LCHxs; and the compute node 2, the cell group 2, and the logical channel group 2 correspond to each other, where the logical channel group 2 includes a plurality of LCHys.

The foregoing describes the data transmission method provided in embodiments of this application. The following describes entities for performing the foregoing data transmission method.

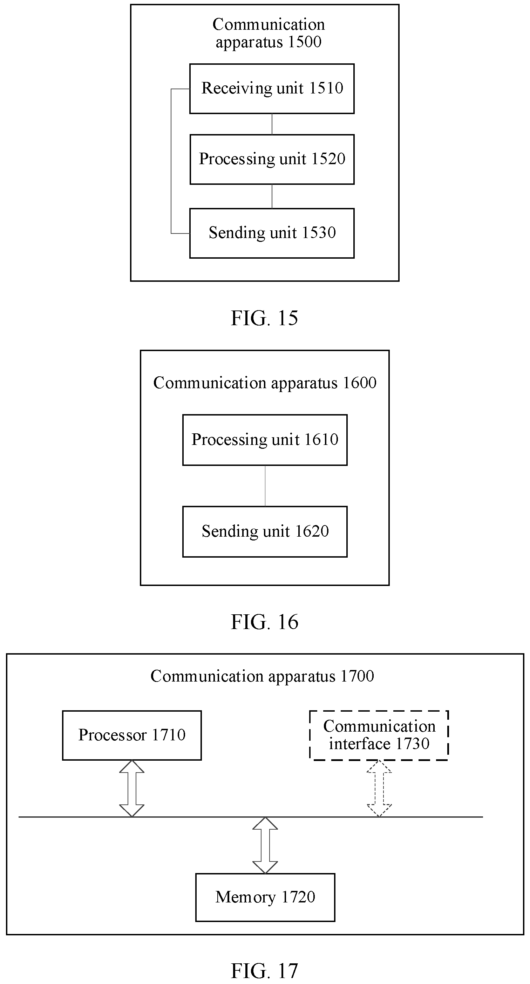

FIG. 15 is a block diagram of a communication apparatus 1500 according to an embodiment of this application. The apparatus may be used in the terminal device in embodiments of this application. The communication apparatus 1500 includes:
a receiving unit 1510, configured to receive configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups;
a processing unit 1520, configured to determine a first compute node, where the first compute node is configured to execute a computing execution function; and
a sending unit 1530, configured to send, based on the configuration information via at least one cell in a first cell group, data on at least one logical channel included in a first logical channel group to the first compute node, where the first cell group, the first compute node, and the first logical channel group correspond to each other, the plurality of compute nodes include the first compute node, the plurality of logical channel groups include the first logical channel group, and the plurality of cell groups include the first cell group.

Optionally, the processing unit 1520 is further configured to cache, based on the configuration information, the data into the at least one logical channel included in the first logical channel group corresponding to the first compute node.

Optionally, the receiving unit 1510 is further configured to receive uplink grant information, where the uplink grant information is used to determine an uplink grant resource of the at least one cell; and
the processing unit 1520 is specifically configured to send, based on the configuration information by using the uplink grant resource of the at least one cell in the first cell group, the data on the at least one logical channel included in the first logical channel group to the first compute node.

Optionally, the sending unit 1530 is specifically configured to:
perform, based on the configuration information, packet assembly on the data on the at least one logical channel included in the first logical channel group, to generate a medium access control protocol data unit MAC PDU; and
send the MAC PDU to the first compute node by using the uplink grant resource of the at least one cell in the first cell group.

Optionally, the MAC PDU includes at least one MAC service data unit SDU on the at least one logical channel included in the first logical channel group.

Optionally, the at least one logical channel is determined based on a priority of data on a logical channel included in the first logical channel group.

Optionally, the at least one cell is determined from the first cell group based on scheduling information from a network device.

FIG. 16 is a block diagram of another communication apparatus 1600 according to an embodiment of this application. The apparatus may be used in the network device in embodiments of this application. The communication apparatus 1600 includes:
a processing unit 1610, configured to determine configuration information, where the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; and
a sending unit 1620, configured to send the configuration information to a terminal device.

FIG. 17 is a block diagram of another communication apparatus 1700 according to an embodiment of this application. The communication apparatus 1700 includes a processor 1710, a memory 1720, and a communication interface 1730.

The memory 1720 is configured to store executable instructions.

The processor 1710 is coupled to the memory 1720 through the communication interface 1730. The processor 1710 is configured to invoke and run the executable instructions in the memory 1720, to implement the methods in embodiments of this application. The communication apparatus may be used in the terminal device or the network device in embodiments of this application. Optionally, the processor 1710 and the memory 1720 are integrated together.

The processor 1710 may be an integrated circuit chip, and has a signal processing capability. In an implementation process, the steps in the foregoing method embodiments may be completed by using an integrated logic circuit of hardware in the processor or instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication apparatus. The communication device includes an input/output interface and a logic circuit. The input/output interface is configured to obtain input information and/or output information. The logic circuit is configured to: perform the method in any one of the foregoing method embodiments, and perform processing and/or generate the output information based on the input information.

An embodiment of this application further provides a computer-readable storage medium. The computer-readable storage medium stores a computer program used to implement the method in the foregoing method embodiments. When the computer program runs on a computer, the computer is enabled to implement the method in the foregoing method embodiments.

An embodiment of this application further provides a computer program product. The computer program product includes computer program code. When the computer program code runs on a computer, the method in the foregoing method embodiment is performed.

An embodiment of this application further provides a chip, including a processor. The processor is connected to a memory, the memory is configured to store a computer program, and the processor is configured to execute the computer program stored in the memory, to enable the chip to perform the method in the foregoing method embodiments.

It should be understood that, in embodiments of this application, numbers "first", "second", and the like are merely used to distinguish between different objects, for example, to distinguish between different correspondences, and do not constitute a limitation on the scope of embodiments of this application. Embodiments of this application are not limited thereto.

In addition, the term "and/or" in this application describes only an association relationship between associated objects, and indicates that three relationships may exist. For example, A and/or B may indicate the following three cases: Only A exists; both A and B exist; or only B exists. In addition, the character "/" in this specification generally represents an "or" relationship between associated objects. In this application, the term "at least one" may represent "one" and "two or more". For example, at least one of A, B, and C may represent the following seventh cases: Only A exists, only B exists, only C exists, both A and B exist, both A and C exist, and both C and B exist, and A, B, C all exist.

A person of ordinary skill in the art may be aware that, in combination with the examples described in embodiments disclosed in this specification, units and algorithm steps may be implemented using electronic hardware or a combination of computer software and electronic hardware. Whether the functions are performed using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, applied to a terminal device, wherein the method comprises:
receiving configuration information, wherein the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups;
determining a first compute node, wherein the first compute node is configured to execute a computing execution function; and
sending, based on the configuration information via at least one cell in a first cell group, data on at least one logical channel comprised in a first logical channel group to the first compute node, wherein the first cell group, the first compute node, and the first logical channel group correspond to each other, the plurality of compute nodes comprise the first compute node, the plurality of logical channel groups comprise the first logical channel group, and the plurality of cell groups comprise the first cell group.

2. The method according to claim 1, wherein the method further comprises:
caching, based on the configuration information, the data into the at least one logical channel comprised in the first logical channel group corresponding to the first compute node.

3. The method according to claim 1 or 2, wherein the method further comprises: receiving uplink grant information, wherein the uplink grant information is used to determine an uplink grant resource of the at least one cell; and
the sending, based on the configuration information via the at least one cell in the first cell group, the data on the at least one logical channel comprised in the first logical channel group to the first compute node comprises: sending, based on the configuration information by using the uplink grant resource of the at least one cell in the first cell group, the data on the at least one logical channel comprised in the first logical channel group to the first compute node.

4. The method according to any one of claims 1 to 3, wherein the sending, based on the configuration information via the at least one cell in the first cell group, the data on the at least one logical channel comprised in the first logical channel group to the first compute node comprises:
performing, based on the configuration information, packet assembly on the data on the at least one logical channel comprised in the first logical channel group, to generate a medium access control protocol data unit MAC PDU; and
sending the MAC PDU to the first compute node by using the uplink grant resource of the at least one cell in the first cell group.

5. The method according to claim 4, wherein
the MAC PDU comprises at least one MAC service data unit SDU on the at least one logical channel comprised in the first logical channel group.

6. The method according to any one of claims 1 to 5, wherein
the at least one logical channel is determined based on a priority of data on a logical channel comprised in the first logical channel group.

7. The method according to any one of claims 1 to 6, wherein
the at least one cell is determined from the first cell group based on scheduling information from a network device.

8. A data transmission method, applied to a network device, wherein the method comprises:
determining configuration information, wherein the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; and
sending the configuration information to a terminal device.

9. A communication apparatus, comprising:
a receiving unit, configured to receive configuration information, wherein the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups;
a processing unit, configured to determine a first compute node, wherein the first compute node is configured to execute a computing execution function; and
a sending unit, configured to send, based on the configuration information via at least one cell in a first cell group, data on at least one logical channel comprised in a first logical channel group to the first compute node, wherein the first cell group, the first compute node, and the first logical channel group correspond to each other, the plurality of compute nodes comprise the first compute node, the plurality of logical channel groups comprise the first logical channel group, and the plurality of cell groups comprise the first cell group.

10. The communication apparatus according to claim 9, wherein
the processing unit is further configured to cache, based on the configuration information, the data into the at least one logical channel comprised in the first logical channel group corresponding to the first compute node.

11. The communication apparatus according to claim 9 or 10, wherein
the receiving unit is further configured to receive uplink grant information, wherein the uplink grant information is used to determine an uplink grant resource of the at least one cell; and
the processing unit is specifically configured to send, based on the configuration information by using the uplink grant resource of the at least one cell in the first cell group, the data on the at least one logical channel comprised in the first logical channel group to the first compute node.

12. The communication apparatus according to any one of claims 9 to 11, wherein the sending unit is specifically configured to:
perform, based on the configuration information, packet assembly on the data on the at least one logical channel comprised in the first logical channel group, to generate a medium access control protocol data unit MAC PDU; and
send the MAC PDU to the first compute node by using the uplink grant resource of the at least one cell in the first cell group.

13. The communication apparatus according to claim 12, wherein
the MAC PDU comprises at least one MAC service data unit SDU on the at least one logical channel comprised in the first logical channel group.

14. The communication apparatus according to any one of claims 9 to 13, wherein
the at least one logical channel is determined based on a priority of data on a logical channel comprised in the first logical channel group.

15. The communication apparatus according to any one of claims 9 to 14, wherein
the at least one cell is determined from the first cell group based on scheduling information from a network device.

16. A communication apparatus, comprising:
a processing unit, configured to determine configuration information, wherein the configuration information indicates at least two of the following: a one-to-one correspondence between a plurality of compute nodes and a plurality of cell groups, a one-to-one correspondence between the plurality of cell groups and a plurality of logical channel groups, or a one-to-one correspondence between the plurality of compute nodes and the plurality of logical channel groups; and
a sending unit, configured to send the configuration information to a terminal device.

17. A communication apparatus, comprising a processor and a memory, wherein the memory is configured to store a computer program, and the processor is configured to execute the computer program stored in the memory, to enable the communication apparatus to perform the method according to any one of claims 1 to 8.

18. A communication apparatus, comprising an input/output interface and a logic circuit, wherein
the input/output interface is configured to obtain input information and/or output information; and
the logic circuit is configured to: perform the method according to any one of claims 1 to 8, and perform processing and/or generate the output information based on the input information.

19. A computer-readable storage medium, wherein
the computer-readable medium stores a computer program; and
when the computer program runs on a computer, the computer is enabled to perform the method according to any one of claims 1 to 8.

20. A computer program product, comprising a computer program, wherein when the computer program is executed, the method according to any one of claims 1 to 8 is implemented.
